Europäisches Patentamt

European Patent Office

Office européen des brevets

(19)

(11) Veröffentlichungsnummer: **0 156 335**
**A2**

## (12) EUROPÄISCHE PATENTANMELDUNG

(21) Anmeldenummer: 85103448.8

(22) Anmeldetag: 23.03.85

(51) Int. Cl.⁴: **H 04 Q 7/04**

(30) Priorität: 24.03.84 DE 3411014

(43) Veröffentlichungstag der Anmeldung:
02.10.85 Patentblatt 85/40

(84) Benannte Vertragsstaaten:
AT BE CH DE FR GB IT LI LU NL SE

(71) Anmelder: Standard Elektrik Lorenz Aktiengesellschaft
Lorenzstrasse 10
D-7000 Stuttgart 40(DE)

(72) Erfinder: Höfgen, Günter
Marderweg 8
D-7014 Kornwestheim(DE)

(72) Erfinder: Langewellpott, Ulrich
Sulzgrieser Steige 23/5
D-7300 Esslingen(DE)

(74) Vertreter: Schmidt, Werner, Dipl.-Phys. et al,
c/o Standard Elektrik Lorenz AG Patent- und
Lizenzwesen Kurze Strasse 8 Postfach 300 929
D-7000 Stuttgart 30(DE)

(54) Nachrichtenübertragungssystem.

(57) Bewegliche Sende/Empfangsstationen sind über Funk mit ortsfesten Sende/Emplangsstationen (BS/A, BS/B, BS/C) verbunden. Die ortsfesten Stationen sind im Zentrum von in Sektoren (1,2,3) eingeteilten Zellen angeordnet. Mehrere Zellen sind zu Gruppen zusammengefaßt. In den Zellen einer Gruppe wird zu einer bestimmten Zeit jeweils nur ein Sektor vom Strahlungsdiagramm der betroffenen ortsfesten Station ausgeleuchtet (Zeit- und Raummultiplex). Die abgestrahlten Signale enthalten jeweils einen Code, der für die Zellen einer Gruppe unterschiedlich ist.

EP 0 156 335 A2

0156335

G.Höfgen-U.Langewellpott-41-5

## Nachrichtenübertragungssystem

Die Erfindung geht aus von einem Nachrichtenübertragungssystem wie im Oberbegriff des Anspruches 1 angegeben. Ein solches Nachrichtenübertragungssystem ist aus der DE-OS 31 18 018 bekannt.

Bei einem solchen Nachrichtenübertragungssystem ist es wichtig, daß sich die voneinander benachbarten ortsfesten Stationen ab-gestrahlten Signale nicht gegenseitig stören. Dies macht es notwendig, daß benachbarte Zellen möglichst gut voneinander ent-koppelt sind.

Aufgabe der Erfindung ist es, hierfür eine Lösung anzugeben.

Die Lösung dieser Aufgabe erfolgt mit den im Anspruch 1 ange-gebenen Mitteln. Vorteilhafte Weiterbildungen sind den Unteransprüchen zu entnehmen.

Durch den Zeit- und Raummultiplex (zu einem bestimmten Zeitpunkt wird in den Zellen jeweils nur ein Sektor ausgeleuchtet) sind benachbarte Zellen gut voneinander entkoppelt. Eine weitere Verbesserung der Entkopplung erhält man gemäß einer Weiterbildung dadurch, daß der Zeit- und Raummultiplex mit einem Code-Multi-plex (den Zellen einer Gruppe ist jeweils ein anderer Code zugeordnet) kombiniert wird.

Dies macht es möglich, die Strahlungsdiagramme, über die die Nachrichtensignale von den ortsfesten Stationen abgestrahlt werden, so auszugestalten, daß ein hoher Antennengewinn erzielt wird. Dies wiederum ermöglicht es, Sender mit geringer Leistung vorzusehen.

0156335

G.Höfgen-U.Langewellpott

Wie bereits erwähnt, wird in der Zelle einer ortsfesten Station zu einem bestimmten Zeitpunkt jeweils nur ein Sektor ausgeleuchtet. Dazu ist es notwendig, daß das Strahlungsdiagramm der Antenne einer ortsfesten Station ein Richtdiagramm ist. Dies wiederum kann in vorteilhafter Weise zur Bestimmung der Richtung zu einer beweglichen Station ausgenützt werden. Gemäß einer Weiterbildung erfolgt die Richtungsbestimmung nach der von Monopulsradargeräten her bekannten Technik.

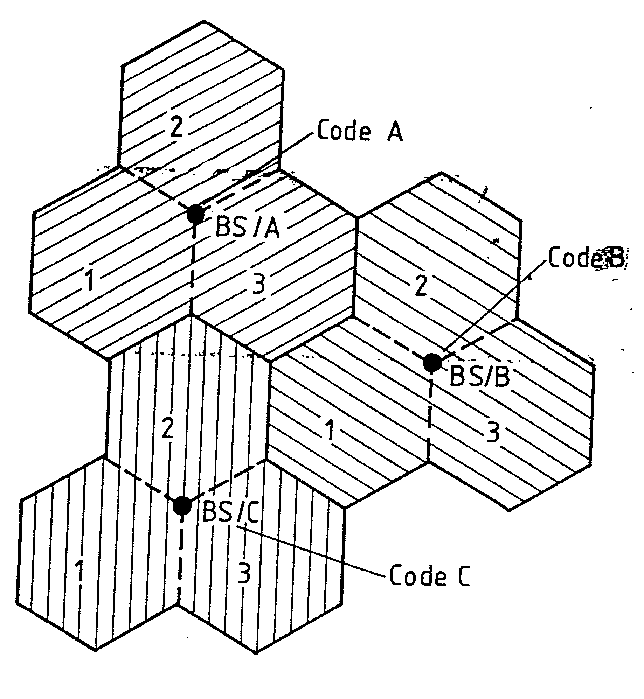

Die Erfindung wird anhand eines Ausführungsbeispiels beispielsweise näher erläutert. Die einzige Zeichnung zeigt in schematischer Darstellung die Aufteilung einer Gruppe in Zellen und Sektoren.

Das Nachrichtenübertragungssystem an sich, seine Funktionsweise und die zum Betrieb notwendigen Stationen sind in der DE-OS 31 18 018.3 und der DE-OS 31 39 408.6 ausführlich beschrieben, und es wird deshalb hier auf diese Einzelheiten nicht näher eingegangen. Die vorliegende Anmeldung befaßt sich damit, wie die räumliche Anordnung der ortsfesten Stationen und die Signalabstrahlung von den ortsfesten Stationen gewählt werden muß, damit sich die von benachbarten Stationen abgestrahlten Signale möglichst wenig stören. Bei der Berücksichtigung der in den genannten Offenlegungsschriften vermittelten Lehre muß beachtet werden, daß der Ausdruck "Zelle" dort eine andere Bedeutung hat. Als Zelle wird dort der Bereich verstanden, der durch eine Leitstelle bestimmt ist. Bei der vorliegenden Anmeldung ist die Zelle der Bereich um eine ortsfeste Station herum. Weiterhin wird bei der Beschreibung davon ausgegangen, daß jeweils mehrere ortsfeste Stationen BS mit einer Funkvermittlungsstelle MSC verbunden sind und daß die Verbindung mit dem Fernsprechnetz über diese Funkvermittlungsstelle erfolgt.

- 3 -

0156335

G.Höfgen-U.Langewellpott-41-5

Die Zeichnung zeigt ein wabenförmiges Muster, bestehend aus Sechsecken. Die Waben sind so aneinander angeschlossen, daß sie eine Fläche lückenlos bedecken. Die bedeckte Fläche ist ein Ausschnitt aus dem Bereich, in dem mittels des neuen Nachrichtenübertragungssystems Nachrichten übertragen werden sollen und stellt eine (nachfolgend näher erläuterte)Gruppe von Zellen dar.

In der Zeichnung sind drei ortsfeste Stationen BS/A, BS/B und BS/C dargestellt, die sich jeweils im Zentrum einer Zelle befinden. Die einzelnen Zellen unterscheiden sich in der Zeichnung durch unterschiedliche Schraffuren. Jede Zelle ist in drei Sektoren 1,2 und 3 aufgeteilt. Jeder Sektor hat die Form eines Sechsecks. Eine Zelle hat somit die Form eines dreiblättrigen Kleeblatts, bei dem die Blätter die drei aneinanderstoßenden Sechsecke sind. Die drei dargestellten Zellen stoßen lückenlos aneinander an und bilden eine Gruppe. Die (nicht dargestellten) aneinanderstoßenden Gruppen ergeben den Bedeckungsbereich des Nachrichtenübertragungssystems.

Zur Vermeidung eines gegenseitigen Störens durch einander benachbarte Zellen leuchten die Antennen der ortsfesten Stationen nicht jeweils die gesamten Zellen aus, sondern nur die erwähnten Sektoren 1, 2 oder 3. Die Antennen sind daher so ausgestattet, daß ihr Strahlungsdiagramm angenähert nur einen Sektor 1, 2 oder 3 bedeckt. Nach einer bestimmten Zeit werden die Strahlungsdiagramme mechanisch oder elektronisch so gesteuert, daß sie die jeweils nächsten Sektoren bedecken. Nach einem Schaltzyklus waren alle Sektoren jeweils einmal ausgeleuchtet. Die Zeitdauer zwischen dem Umschalten kann gleich der Länge eines Blockes von Zeitschlitzen gewählt werden.

- 7 -

G.Höfgen-U.Langewellpott-41-5

Die Verteilung der zu den jeweiligen Zeiten ausgeleuchteten Sektoren ist so gewählt, daß die sich die Strahlungsdiagramme benachbarter Zellen möglichst wenig überschneiden.

Die Ausrichtung zu einem bestimmten Zeitpunkt kann so gewählt werden, daß die

ortsfeste Station BS/A den Sektor 2 ihrer Zelle, die
ortsfeste Station BS/C den Sektor 1 ihrer Zelle, und die
ortsfeste Station BS/E den Sektor 3 ihrer Zelle ausleuchtet.
Das Umschalten der Richtung, in die die Richtdiagramme der ortsfesten Stationen weisen, erfolgt im gleichen Richtungssinn. Es ist ein synchrones Weiterschalten möglich. Falls es die Verkehrsdichte in bestimmten Bereichen notwendig macht, ist es möglich, das Umschalten für die Zellen nicht synchron vorzusehen.

Die Entkopplung zwischen benachbarten Zellen kann man weiter verbessern, wenn man den Zeit- und Raummultiplex mit einem Code-Multiplex kombiniert.

Von den ortsfesten Stationen werden digitale Signale abgestrahlt. Bei der Realisierung gemäß den zitierten Offenlegungsschriften wird die Spreizspektrumstechnik angewandt. Unter Codemultiplex wird hier verstanden, daß die Signale unterschiedliche Codes enthalten. Unterschiedliche Codes können die Signale in ihren Synchronisationspräambeln enthalten, es kann der bei der Spreizspektrumstechnik angewandte Code unterschiedlich sein, es kann das gesamte Nachrichtensignal zur Unterscheidung mit einem Code moduliert sein,und es ist eine Kombination der hier aufgelisteten Möglichkeiten realisierbar.

0156335

G.Höfgen-U.Langewellpott-41-5

Bei dem Ausführungsbeispiel für das neue Nachrichtensystem besteht, wie bereits erwähnt, eine Gruppe aus drei Zellen mit jeweils drei Sektoren. Hierbei ist der oben erwähnte Code für eine Zelle gleich und er ist unterschiedlich für die einander benachbarten Zellen einer Gruppe.

Dadurch wird im Zusammenhang mit dem Zeit- und Raummultiplex erreicht, daß eine gegenseitige Störung durch Signale aus einander benachbarten Zellen weitestgehend unterdrückt wird.

Bei der obigen Beschreibung wurde davon ausgegangen, daß alle Sektoren, Zellen und Gruppen dieselbe Form haben. Dies ist jedoch nicht erforderlich, sondern es ist zur Anpassung an geographische Gegebenheiten oder an das Verkehrsaufkommen möglich, sowohl die Form als auch die Größe zu variieren.

Auf die gerätetechnische Realisierung eines solchen zellularen Nachrichtenübertragungssystems, das sich aus Zellen und Gruppen von Zellen zusammensetzt, wird hier nicht näher eingegangen, da dies bei Kenntnis der Lehre in den genannten Offenlegungschriften und der obigen Ausführungen fachmännisches Wissen ist.

In vielen Fällen ist es wünschenswert, den Standort der beweglichen Sende/Empfangsstation, die gerade ein Nachrichtensignal abgibt, zu kennen. Eine Grobortung ist bei dem neuen System bereits dadurch möglich, daß man ermittelt, in welchem Sektor einer Zelle das Nachrichtsignal empfangen wird. Eine genauere Richtungsbestimmung ist mittels der vom Monopulsradargerät her bekannten Technik möglich. Dort werden Signale über zwei um einen kleinen Winkel gegeneinander versetzte Richtdiagramme empfangen,und zur Auswertung wird ein Summen- und ein Differenz-

- 9 -

G.Höfgen-U.Langewellpott-41-5

signal erzeugt. Auf die Auswertung wird hier nicht näher eingegangen, da diese dem Fachmann bekannt ist, z. B. aus dem
Buch "Radar Handbook" von M.I.Skolnik, Mc Graw-Hill Verlag,
New York 1970, Seiten 21 - 10 bis 21 - 30.

Zur Messung der Entfernung wird in an sich bekannter Weise die
Laufzeit der aus Impulsgruppen bestehenden Nachrichtensignale
ausgewertet. Es wird die Laufzeit des Signals von der ortsfesten Station zur beweglichen Station und des daraufhin von
der beweglichen Station zur ortsfesten Station abgestrahlten
Signals gemessen. Die Summe der beiden Laufzeiten ist gleich
der Differenz zwischen dem Zeitpunkt, zu dem die ortsfeste Station ein Signal abstrahlt, und dem Zeitpunkt, zu dem die ortsfeste Station ein Signal von der beweglichen Station empfängt,
minus der konstanten Zeitspanne, die zwischen dem Empfang des
von der ortsfesten Station abgestrahlten Signals in der beweglichen Station und der Abstrahlung eines Signals von der beweglichen Station vergeht. Die Abstrahlung dieses Signals wird
durch den Empfang des Signals von der ortsfesten Station veranlaßt. Aus den Laufzeiten wird die Entfernung der beweglichen
Station von der ortsfesten Station ermittelt. In der ortsfesten
Station sind somit die Richtung, unter der ein von der beweglichen Station abgestrahltes Signal einfällt, und die Entfernung zur beweglichen Station bekannt. Daraus wird in an sich
bekannter Weise der Standort berechnet.

Soll der Standort auf diese Weise ermittelt werden, dann werden
zur Ausleuchtung der Sektoren, die die Zellen bilden, nicht
einkeuligen, sondern doppelkeulige Richtdiagramme verwendet.
Die doppelkeuligen Richtdiagramme sind so gewählt, daß sie die
Sektoren ausleuchten. Da bei der Richtungsbestimmung keine große
Meßgenauigkeit verlangt ist, können die Strahlungskeulen relativ

0156335

G.Höfgen-U.Langewellpott-41-5

bréit gewählt werden.

0156335

STANDARD ELEKTRIK LORENZ

   AKTIENGESELLSCHAFT

   S T U T T G A R T

G.Höfgen-U.Langewellpott-41-5

Patentansprüche

1. Nachrichtenübertragungssystem mit ortsfesten Sende/Empfangsstationen und beweglichen Sende/Empfangsstationen, die über Funk im Zeitmultiplex mit den ortsfesten Stationen Nachrichten austauschen können, wobei mehrere ortsfeste Stationen mit einer Funkvermittlungsstelle verbunden und von dieser gesteuert werden, d a d u r c h   g e k e n n z e i c h n e t, daß jede ortsfeste Sende/Empfangsstation (BS/A, BS/B, BS/C) angenähert im Zentrum einer Zelle (1+2+3) angeordnet ist, daß die Zellen (1+2+3) jeweils in mehrere Sektoren (1, 2, 3) aufgeteilt sind und zwar so, daß die einander entsprechenden Sektoren aller Zellen räumlich gleich ausgerichtet sind, daß die ortsfesten Sende/Empfangsstationen zu einem bestimmten Zeitpunkt nur jeweils einen Sektor der betroffenen Zellen ausleuchten, und daß die einzelnen Sektoren der Zellen nacheinander ausgeleuchtet werden.

2. Nachrichtenübertragungssystem nach Anspruch 1, dadurch gekennzeichnet, daß jeweils mehrere Zellen zu einer Gruppe zusammengefaßt sind, wcbei sich die Zellen einer Gruppe dadurch unterscheiden, daß die Signale für jede Zelle einer Gruppe einen anderen Code (A oder B oder C) enthalten.

ZT/P1-Sm/Ni

21.03.1984

0156335

G.Höfgen-U.Langewellpott-41-5

3. Nachrichtenübertragungssystem nach Anspruch 1 oder 2, dadurch gekennzeichnet, daß die Zellen zumindest angenähert die Form eines Sechsecks haben und daß die Gruppen jeweils aus drei solcher einander benachbarten Zellen bestehen.

4. Nachrichtenübertragungssystem nach Anspruch 1 oder 2, dadurch gekennzeichnet, daß die Zellen aus drei zueinander benachbarten Sechsecken, die die Sektoren einer Zelle sind, bestehen, und daß drei solcher zueinander benachbart angeordnete Zellen eine Gruppe bilden.

5. Nachrichtenübertragungssystem nach einem der Ansprüche 1 bis 4, dadurch gekennzeichnet, daß die Umschaltung zum nächsten Sektor jeweils nach einem Block von Zeitschlitzen erfolgt.

6. Nachrichtenübertragungssystem nach einem der Ansprüche 1 bis 5, dadurch gekennzeichnet, daß die Nachrichtensignale digitale Signale, deren eine Synchronisationspräambel vorangestellt ist.

7. Nachrichtenübertragungssystem nach Anspruch 6, dadurch gekennzeichnet, daß die für die Zellen einer Gruppe unterschiedlichen Codes Bestandteil der Synchronisationspräambel, oder des Nachrichtensignals oder der Synchronisationspräambel und des Nachrichtensignals sind.

8. Nachrichtenübertragungssystem nach Anspruch 6, dadurch gekennzeichnet, daß die Signalübertragung in Spreizspektrumstechnik erfolgt und daß die für die Zellen einer Gruppe unterschiedlichen Codes die bei der Spektrumsspreizung verwendeten

G.Höfgen-U.Langewellpott-41-5

. Codes sind.

9 . Nachrichtenübertragungssystem nach einem der Ansprüche
1 bis 8, dadurch gekennzeichnet, daß zur Richtungsbestimmung
der beweglichen Sende/Empfangsstationen in den ortsfesten
Sende/Empfangsstationen eine Peilung der von den mobilen
Sende/Empfangsstationen abgestrahlten Signale in der Radar-
Monopuls-Technik erfolgt.

10. Nachrichtenübertragungssystem nach Anspruch 9 , dadurch
gekennzeichnet, daß aus Signallaufzeiten von Impulsgruppen
von einer ortsfesten Station zu einer beweglichen Station
und von der beweglichen Station zu der ortsfesten Station
unter Berücksichtigung der Zeitspanne, die zwischen dem Empfang und der Abstrahlung eines Signals in der beweglichen Station vergeht, in der ortsfesten Station die Entfernung zur beweglichen Station gemessen wird, und daß aus Richtung und der
Entfernung zur ortsfesten Station der Standort der beweglichen
Station ermittelt wird.

11. Nachrichtenübertragungssystem nach einem der Ansprüche 1
bis 10, dadurch gekennzeichnet, daß zur Ausleuchtung eines Sektors in einer Zelle die ortsfesten Stationen Richtantennen aufweisen, die an einen gemeinsamen Sender und Empfänger angeschlossen sind.

0156335